# EUROPÄISCHE PATENTSCHRIFT

(11) **EP 0 379 698 B1**
(45) Veröffentlichungstag und Bekanntmachung des Hinweises auf die Patenterteilung: **03.02.1993**
(21) Anmeldenummer: 89123258.9
(22) Anmeldetag: 15.12.1989
(51) Int. Cl.: G07C 7/00

(54) **Dichteinrichtung für eine schlitzförmige Öffnung eines Datenerfassungsgerätes**
Sealing device for a slit opening in a data-registering apparatus
Dispositif d'étanchéité pour une ouverture en forme de fente d'un appareil d'enregistrement de données

(30) Priorität: 25.01.1989 DE 3902088
(43) Veröffentlichungstag der Anmeldung: 01.08.1990
(73) Patentinhaber: Mannesmann Kienzle GmbH (HR B1220), 78052 Villingen-Schwenningen (DE)
(72) Erfinder: Helmschrott, Norbert, D-7730 Villingen-Schwenningen (DE)

(56) Entgegenhaltungen:
- EP-A- 0 230 375
- EP-A- 0 271 001
- BE-A- 901 134
- CH-A- 628 170
- DE-U- 8 805 789
- US-A- 4 785 365

## Beschreibung

Die Erfindung betrifft eine Dichteinrichtung für eine schlitzförmige Öffnung eines Datenerfassungsgerätes, durch welche die Eingabe bzw. Entnahme von in dem Datenerfassungsgerät verwendeten, flachen Datenträgern erfolgt.

Bei Datenerfassungsgeräten, im weitesten Sinne bei Geräten, bei denen der Datentransport, d. h. die Dateneingabe und/oder Datenausgabe mittels mehr oder weniger dicker, jedoch flacher Karten oder blattförmiger, eine gewisse Steifigkeit aufweisender Datenträger erfolgt, stellt die für die Ein- und Ausgabe der Datenträger vorgesehene,schlitzförmige Öffnung in dem betreffenden Gerätegehäuse zweifellos eine Schwachstelle dar. D. h. die schlitzförmige Öffnung bietet einerseits Eingriffsmöglichkeiten, insbesondere ermöglicht sie das Einstecken von Fremdkörpern, andererseits besteht je nach Einsatzmilieu die Gefahr erheblicher Verschmutzungen und daraus sich ergebender Funktionsstörungen.

Es ist daher naheliegend, derartige Eingabe-/Entnahmeschlitze weitgehend eingriffssicher und wenigstens staubdicht zu verschließen. Dabei sind nach außen öffnende, verschließbar ausgerüstete Klappen oder Deckel sowohl aus ästhetischen, als auch aus praktischen Gründen wenig sinnvoll; sie würden den Vorteil der Eingabe eines Datenträgers durch einen Schlitz erheblich einschränken. Andererseits bieten vergleichbare Schließ- bzw. Dichteinrichtungen, die verdeckt innerhalb eines Datenerfassungsgerätes anzuordnen sind, wegen des Raumbedarfs und wegen der erforderlichen getrieblichen Verbindung zwischen einem von außen steuerbaren Motor oder einem Schloß und dem eigentlichen Schließ- und Dichtelement erhebliche konstruktive und montagetechnische Schwierigkeiten und nur mit hohem Aufwand eine zufriedenstellende Dichtfunktion.

Das Problem stellt sich vor allem dort, wo derartige Geräte in einem rauhen Milieu, vor allem außerhalb geschlossener Räume eingesetzt sind. Beispiele hierfür sind Mietwagen, Taxifahrzeuge, Nutzfahrzeuge, externe Bankschalter, kreditkartenbetätigte Park-, Telefon- und Tankautomaten u. dgl.

Ein besonders sensibles Datenerfassungsgerät, bei dem wegen des dokumentarischen Wertes der Aufzeichnungen ein hohes Maß an Eingriffs- und Verschmutzungssicherheit gefordert ist, ist der in Kraftfahrzeugen eingesetzte Fahrtschreiber. Bei dieser Gerätegattung kommt für eine geeignete Dichteinrichtung erschwerend hinzu, daß sie den Bedingungen der Großserie gerecht werden muß und als relativ untergeordnete Einrichtung lediglich mit einem minimalen Aufwand realisierbar sein darf. Dabei werden an die Funktionssicherheit hohe Anforderungen gestellt, da die Datenträger, in diesem Falle die als Aufzeichnungsträger für visuelle Informationen dienenden Diagrammscheiben und gegebenenfalls den Fahrern zugeordnete, personenbezogene Datenkarten, relativ oft ein- und ausgegeben werden müssen, nämlich bei Polizeikontrollen, bei Fahrerwechsel innerhalb des Fahrzeuges, bei Fahrzeugwechsel eines oder beider Fahrer sowie beim täglichen Wechseln der Diagrammscheiben, deren Registrierschicht abhängig vom angewandten Registrierverfahren mehr oder weniger druck- und kratzempfindliche sein kann.

Einschlägige Dichteinrichtungen für schlitzförmige Öffnungen von Datenerfassungsgeräten sind aus den Dokumenten DE-U-8805789, CH-A-628170 und BE-A-901134 bekannt.

Der Erfindung war somit die Aufgabe gestellt, eine Dichteinrichtung zum Verschließen eines Eingabe-/ Entnahmeschlitzes eines Datenerfassungsgerätes zu schaffen, die universell verwendbar ist, die den Anforderungen der Funktionssicherheit gerecht wird, möglichst wenig Geräteraum beansprucht und eine zufriedenstellende Serienfertigungsfähigkeit aufweist.

Diese Aufgabe wird durch die im kennzeichnenden Teil des Patentanspruches 1 aufgeführten Merkmale gelöst.

Ein bevorzugtes Ausführungsbeispiel ist dadurch gekennzeichnet, daß als Dichtkörper eine zylindrische Stange Anwendung findet, welcher als Führung eine in einem Gehäusebauteil des Datenerfassungsgerätes zur Eingabe-/Entnahmeebene offen ausgebildete Nut zugeordnet ist und daß der einen Nut spiegelbildlich zur Eingabe-/ Entnahmeebene eine zweite Nut zugeordnet ist und als Auflage für die in der einen Nut quer zur Eingabe-/Entnahmeebene geführte zylindrische Stange, in der anderen Nut eine weitere zylindrische Stange eingesetzt ist. Die übrigen Unteransprüche beschreiben weitere vorteilhafte Ausgestaltungen der Erfindung.

Die Erfindung bietet den Vorteil, daß sie mit äußerst geringem Aufwand herstellbar ist und aufgrund des geringen Raumbedarfs in jedes Gerätekonzept integriert werden kann, also vielseitig verwendbar ist. Es sind bei dem bevorzugten Ausführungsbeispiel lediglich zwei zylindrische Stangen, also einfachste Bauteile, erforderlich, die in geeigneten, spritzgußtechnisch formbaren Nuten oder Taschen in zusammenzufügenden Gehäusebauteilen gehaltert bzw. geführt sind und im einfachsten Falle lediglich durch die Schwerkraft dichtend aufeinanderliegen. Ferner ist die unmittelbar durch einen formsteifen Datenträger auslösbare Öffnungs-und Schließfunktion der erfindungsgemäßen Schließ- und Dichteinrichtung in hohem Maße funktionssicher. Sie erfordert weder einen Steuervorgang und entsprechende Betätigungsmittel, noch Energie. Außerdem lassen sich Dichtkörperdurchmesser und die Höhe der Anpreßkraft, abhängig vom verwendeten Datenträger, in einem weiteren Bereich variieren. Die Keilwirkung zwischen dem Betätigungselement "Datenträger" und beispielsweise der als verschiebbarer, aber auch rollfähiger Dichtkörper dienenden zylindrischen Stange läßt relativ große Anpreßkräfte zu, es sei denn der Datenträger ist, wie beispielsweise Diagrammscheiben, druckempfindlich und/oder der Reibungswiderstand wird durch die Leistungsfähigkeit einer der Dichteinrichtung nachgeschalteten Transporteinrichtung auf einen relativ niedrigen Wert begrenzt. Für die Eingriffssicherheit ist es wesentlich, daß die maximale Öffnung des Eingabe-/Entnahmeschlitzes nur wenig größer als die Stärke des Datenträgers gewählt wird. Diese Forderung ist bei der gefundenen Lösung deshalb leicht realisierbar, da kein Sicherheitsüberhub einer die Schließ-bzw. Dichteinrichtung steuernden Mechanik vorzusehen ist.

Eine andere passive Dichteinrichtung, beispielsweise mit einem Borstenband oder mit textilen Streifen, hat den Nachteil, daß die Borsten relativ bald verschmutzen, durch häufige Richtungswechsel ermüden und brechen und einen hohen Transportwiderstand schaffen. Ferner sind pendelnd gelagerte Dichtkörper denkbar, die jedoch aus fertigungstechnischen Gründen grundsätzlich keine zufriedenstellende Dichtfunktion bieten können.

Für in Fahrzeugen eingesetzte Datenerfassungsgeräte, die Schwingungen ausgesetzt sind, ist es, um Geräuschbildung zu vermeiden, vorteilhaft, einen kunststoffüberzogenen Dichtkörper oder eine elastomere Auflage für den Dichtkörper vorzusehen.

Von Vorteil ist ferner, daß der erfindungsgemäßen Dichteinrichtung die Funktion eines Signalgebers zugeordnet werden kann, indem beispielsweise die beiden zylindrischen Stangen in geeigneter Weise kontaktiert werden oder der beweglichen Stange ein Schalter zugeordnet wird. Mit dieser Maßnahme läßt sich eine den Eingabeschacht überwachende Lichtschranke vermeiden.

Im folgenden sei die Erfindung anhand von Zeichnungen näher erläutert, die ein Ausführungsbeispiel eines Fahrtschreibers darstellen, in welchem gleichzeitig auf zwei parallel liegenden Diagrammscheiben registriert werden kann. Es zeigen
FIGUR 1 eine Frontansicht des betreffenden Fahrtschreibers,
FIGUR 2 eine schematisierte, teilweise Seitenansicht des Fahrtschreibers mit einem Aufbruch gemäß der Schnittlinie A in FIGUR 1,
FIGUR 3 eine teilweise Frontansicht des Fahrtschreibers mit einem Schnitt gemäß der Schnittlinie B in FIGUR 2,
FIGUR 4 eine vergrößerte Darstellung der Dichteinrichtung gemäß FIGUR 2,
FIGUR 5 eine Schnittdarstellung einer Ausführungsvarianten der Dichteinrichtung.

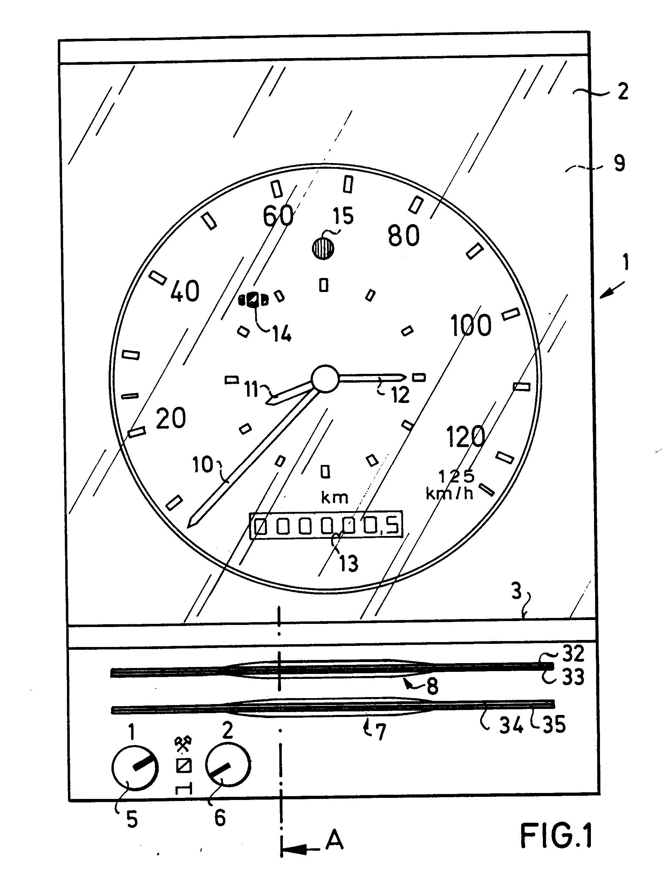

Die FIGUR 1 zeigt einen Fahrtschreiber, welcher mit einem Gehäuse 1, einer Frontscheibe 2, welche die in einem Fensterausschnitt 3 der Frontwand 4 des Gehäuses 1 sichtbaren Anzeigemittel abdeckt,sowie mit Einstellknöpfen 5 und 6 zum fahrerbezogenen Anwählen verschiedener Arbeitszeitarten als autonomes Gerät ausgebildet ist. Mit 7 und 8 sind Eingabe-/Entnahmeschlitze für die von Fahrer und Beifahrer als Aufzeichnungs-bzw. Datenträger zu benutzenden Diagrammscheiben bezeichnet.

Ein solcher mit frontseitig zugänglichen Eingabe-/Entnahmeschlitzen 7, 8 ausgestatteter Fahrtschreiber gestattet eine bausteinartige Verwendung und einen frontflächenbündigen Einbau in einem Armaturenbrett eines Kraftfahrzeuges, wobei sich die Frontscheibe 2 evtl. durchgehend über mehrere Fahrzeuggeräte bzw. Instrumentenbausteine erstrecken kann. Der Fensterausschnitt 3 des Gehäuses 1 ist von einem mit einer topfförmigen Vertiefung versehenen Zifferblatt 9 abgedeckt. In der topfförmigen Vertiefung des Zifferblatts 9 sind Zeiger 10, 11 und 12 für die Geschwindigkeits- und die Zeitanzeige sowie diesen zugeordnete Skalen sichtbar. Ferner sind Fensterausschnitte 13 und 14 für die Streckenanzeige und die Laufwerkskontrolle sowie eine Warnlampe 15 vorgesehen. Insofern entspricht der dargestellte Fahrtschreiber dem Charakter herkömmlicher Fahrtschreiber.

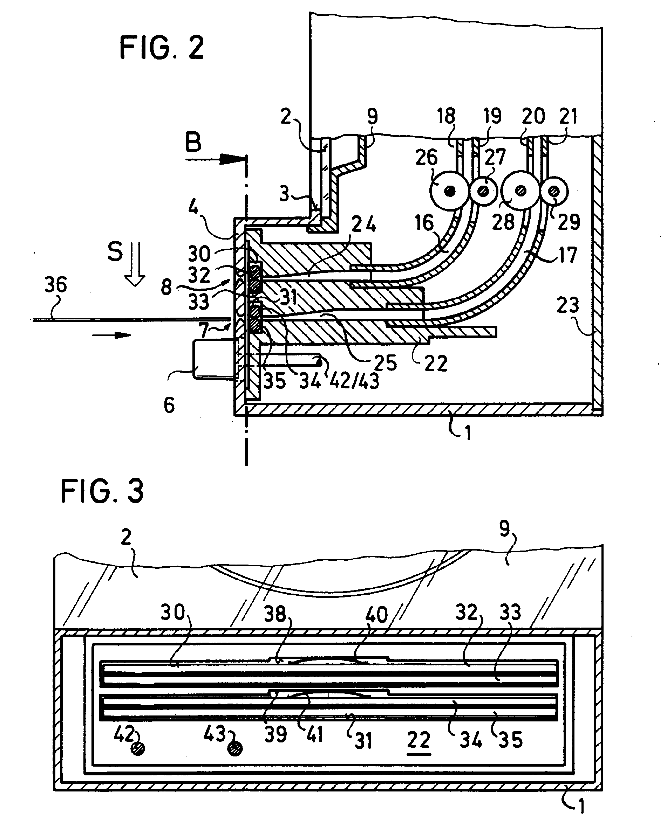

Die Einstellknöpfe 5 und 6, denen die üblichen Symbole für Lenken, Bereitschaft und Pause zugeordnet sind, können als Befehlsorgane für das Ausgeben der Diagrammscheiben ausgebildet und beispielsweise in axialer Richtung betätigbar sein. Ferner können den Eingabe-/Entnahmeschlitzen 7 und 8 Leuchtdioden zugeordnet sein, die es gestatten, den jeweiligen Zustand "belegt" oder "frei", der den Eingabe-/Entnahmeschlitzen 7 und 8 nachgeordneten Führungsschächte 16 und 17 für die Diagrammscheiben (FIGUR 2) anzuzeigen.

Wie weiter aus FIGUR 2 hervorgeht, sind die Führungsschächte 16 und 17, die im wesentlichen von den Platten 18 und 19 sowie 20 und 21 gebildet werden, gekrümmt gestaltet, da, um bei dem betreffenden Fahrtschreiber eine möglichst geringe Bautiefe zu erzielen, die Registrierpositionen der Diagrammscheiben in Ebenen parallel zur Frontfläche bzw Anzeigeebene vorgesehen sind. Die Platten 18, 19 und 20, 21 dienen außerdem als Montageplatten für ein Geschwindigkeitsmeßwerk, ein Laufwerk für die Zeitanzeige und den Registrierantrieb sowie für die vorgesehenen Registriermittel, die jedoch, weil nicht erfindungswesentlich, nicht dargestellt sind.

Die Platten 18/19 und 20/21 bilden zusammen mit einem Halter 22 ein Gestell, welches mit dem Gehäuse 1, das durch eine Rückwand 23 abgeschlossen ist, in Verbindung steht. Diese Verbindung ist derart getroffen, daß im Halter 22 befindliche, die Führungsschächte 16 und 17 abschließende Schlitze 24, 25 mit den Eingabe-/Entnahmeschlitzen 7 und 8 in der Frontwand 4 des Gehäuses 1 oder einer der Frontwand des Gehäuses zugeordneten Blende fluchten. Mit 26, 27 und 28, 29 sind durch nicht näher bezeichnete Öffnungen in den Platten 18, 19 und 20, 21 in die Führungsschächte 16, 17 eingreifende Transport-und Gegendruckrollenpaare bezeichnet.

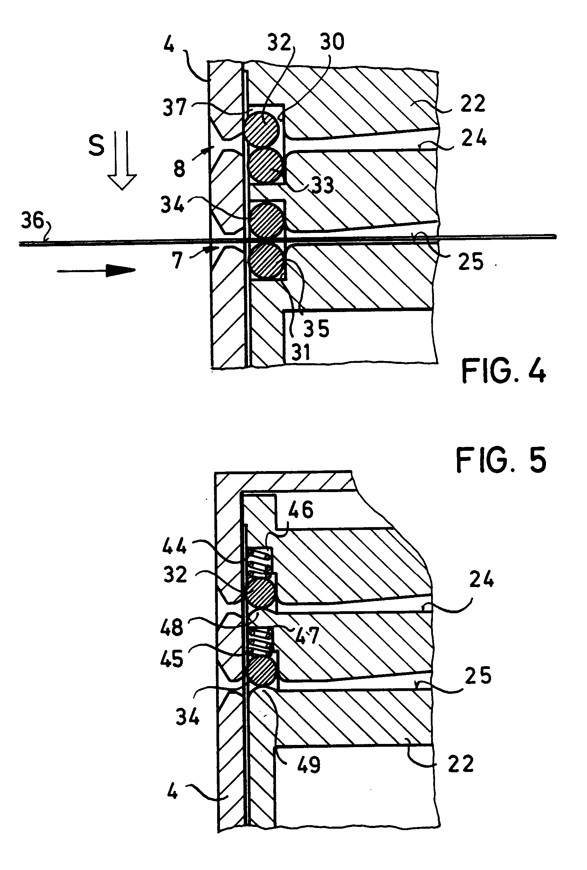

Die FIGUR 2 zeigt ferner, daß in dem Halter 22 beidseitig der Schlitze 24, 25 Freisparungen 30 und 31 ausgebildet sind, die sich wenigstens über die gesamte Breite der Schlitze 24, 25 erstrecken und mittels denen beim Einbau des Gestells in das Gehäuse 1 zwischen der Frontwand 4 und dem Halter 22 Taschen bzw. Nute gebildet werden. In die Nute sind zylindrische Stangen 32, 33 und 34, 35 eingelegt, und zwar mit allseitigem Spiel. Unter der Wirkung der Schwerkraft, die mit Pfeil S angedeutet ist, liegen die beiden Stangen 32 und 33 bzw. 34 und 35 jeweils aufeinander. Dabei sind die Freisparungen 30 und 31 derart ausgebildet, daß die in Richtung des Pfeiles S untenliegenden Stangen 33 bzw. 35 an den durch die Eingabe-/Entnahmeschlitze 7 und 8 sowie die Schlitze 24 und 25 gebildeten schmalen Eingabeschächten tangieren bzw. um ein geringes Maß in diese eingreifen und den auf den Stangen 33 und 35 liegenden Stangen 32 und 34 entgegen der Richtung des Pfeiles S in der jeweiligen Nut wenigstens der Stärke der Diagrammscheiben 36 entsprechende Freiräume zugeordnet sind. In FIGUR 4 ist einer dieser Freiräume mit 37 bezeichnet. Im übrigen zeigt FIGUR 4 die erfindungsgemäße Dichteinrichtung im Zustand des Eingebens der Diagrammscheibe 36.

Die Schnittansicht FIGUR 3 zeigt den Freisparungen 30 und 31 zugeordnete Ausschnitte 38 und 39, in welchen Blattfedern 40 und 41 angeordnet sind. Mit 42 und 43 sind die Schäfte der Einstellknöpfe 5 und 6 bezeichnet. Durch die Verwendung der Blattfedern 40 und 41 läßt sich die Wirkung der Schwerkraft unterstützen, so daß die Funktion der Dichteinrichtung auch bei einer gewissen Schräglage des Fahrtschreibers gewährleistet ist. Dieselbe Funktion haben die in FIGUR 5 dargestellten Druckfedern 44 und 45, die jeder Stange 32 und 34 vorzugsweise paarweise zugeordnet und zu deren Aufnahme im Halter 22 geeignete Vertiefungen 46 und 47 ausgeformt sind. Die Ausführungsvariante gemäß FIGUR 5 zeigt jeweils nur eine zylindrische Stange 32 bzw. 34. Die jeweiligen Auflagen 48 bzw. 49 sind unmittelbar am Halter 22 angeformt.

## Patentansprüche

1. Dichteinrichtung für eine schlitzförmige Öffnung (7,8) eines Datenerfassungsgerätes (1), durch welche die Eingabe bzw. Entnahme von in dem Datenerfassungsgerät (1) verwendeten flachen Datenträgern (36) erfolgt, mit wenigstens einem stangenförmigen Dichtkörper (32,34), welcher der Breite des Eingabe-/Entnahmeschlitzes (7,8) entspricht und im wesentlichen quer zur Eingabe-/Entnahmeebene des Datenträgers (36) bewegbar gehaltert ist und mit einer Auflage (33,35,49), mit welcher der Dichtkörper (32,34) kraftschlüssig in Wirkverbindung steht,
dadurch gekennzeichnet,
daß als Dichtkörper eine vollprofilierte, zylindrische Stange (32, 34) Anwendung findet, welcher als Führung eine in einem Gehäusebauteil des Datenerfassungsgerätes zur Eingabe-/Entnahmeebene offen ausgebildete Nut zugeordnet ist, deren Breite im wesentlichen dem Durchmesser der zylindrischen Stange (32, 34) entspricht.

2. Dichteinrichtung nach Anspruch 1,
dadurch gekennzeichnet,
daß der einen Nut spiegelbildlich zur Eingabe-/Entnahmeebene eine zweite Nut zugeordnet ist und
daß als Auflage für die in der einen Nut quer zur Eingabe-/Entnahmeebene geführte, zylindrische Stange (32) in der anderen Nut eine weitere zylindrische Stange (33) eingesetzt ist.

3. Dichteinrichtung nach Anspruch 1,
dadurch gekennzeichnet,
daß der Stange wenigstens eine quer zur Eingabe-/Entnahmeebene wirkende Feder (40, 41 bzw. 44, 45) zugeordnet ist.

4. Dichteinrichtung nach Anspruch 1,
dadurch gekennzeichnet,
daß der Stange eine elastomere Auflage zugeordnet ist.

5. Dichteinrichtung nach Anspruch 1,
dadurch gekennzeichnet,
daß die Stange mit einem elastomeren Überzug versehen ist.

6. Dichteinrichtung nach Anspruch 1,
dadurch gekennzeichnet,
daß die Stange ein hohes spezifisches Gewicht aufweist und der Kraftschluß mit der ihr zugeordneten Auflage schwerkraftabhängig erfolgt.

7. Dichteinrichtung nach Anspruch 1,
dadurch gekennzeichnet,
daß auf ein und derselben Seite der Eingabe-/Entnahmeebene mehr als eine zylindrische Stange angeordnet sind.

8. Dichteinrichtung nach Anspruch 1,
dadurch gekennzeichnet,
daß zur Bildung der Nut eine frontseitige Gehäusewand (4) des Datenerfassungsgerätes im Bereich des Eingabe-/Entnahmeschlitzes (7, 8) mit einem Halter (22) in Verbindung steht, in welchem sich der Eingabe-/Entnahmeschlitz (7, 8) fortsetzt (Schlitze 24, 25) und an welchem stirnseitig eine Freisparung (30. 31) ausgeformt ist.

9. Dichteinrichtung nach Anspruch 1,
dadurch gekennzeichnet,
daß der Kraftschluß der Stange mit der Auflage magnetisch erfolgt.

10. Dichteinrichtung nach Anspruch 1,
dadurch gekennzeichnet,
daß der Stange wenigstens ein Kontakt eines durch den Datenträger betätigbaren Schalters eines Signalstromkreises zugeordnet ist.

## Claims

1. Sealing means for a slot-shaped opening (7, 8) of a data acquisition device (1), through which flat data carriers (36) used in the data acquisition device (1) are input and removed, having at least one rod-shaped sealing body (32, 34) which corresponds to the breadth of the input/removal slot (7, 8) and is movably held substantially transversely with respect to the input/removal plane of the data carrier (36), and having a support (33, 35, 49) with which the sealing body (32, 34) is in non-positive active connection, characterized in that there is used as the sealing body a fully profiled cylindrical rod (32, 34) with which there is associated as a guide a groove which is constructed to be open towards the input/removal plane in a housing component of the data acquisition device and whereof the breadth corresponds substantially to the diameter of the cylindrical rod (32, 34).

2. Sealing means according to Claim 1, characterized in that a second groove is associated with the one groove, in mirror symmetry with respect to the input/removal plane, and in that a further cylindrical rod (33) is inserted in the other groove as a support for the cylindrical rod (32) guided in the one groove transversely with respect to the input/removal plane.

3. Sealing means according to Claim 1, characterized in that at least one spring (40, 41 and 44, 45 respectively) acting transversely with respect to the input/removal plane is associated with the rod.

4. Sealing means according to Claim 1, characterized in that an elastomeric support is associated with the rod.

5. Sealing means according to Claim 1, characterized in that the rod is provided with an elastomeric coating.

6. Sealing means according to Claim 1, characterized in that the rod has a high specific gravity and the non-positive connection with the support associated therewith is dependent on gravity.

7. Sealing means according to Claim 1, characterized in that more than one cylindrical rod is arranged on one and the same side of the input/removal plane.

8. Sealing means according to Claim 1, characterized in that, to form the groove, a front housing wall (4) of the data acquisition device is connected, in the region of the input/removal slot (7, 8), to a holder (22) in which the input/removal slot (7, 8) is continued (slots 24, 25) and in which a recess (30, 31) is made on the end side.

9. Sealing means according to Claim 1, characterized in that the non-positive connection of the rod to the support is magnetic.

10. Sealing means according to Claim 1, characterized in that at least one contact of a switch, actuable by the data carrier, of a signalling circuit is associated with the rod.

## Revendications

1. Dispositif d'étanchéité pour une ouverture en forme de fente (7,8) d'un appareil d'acquisition de données (1) par laquelle s'opère l'introduction ou le prélèvement de supports de données plats (36) utilisés dans ledit appareil d'acquisition de données (1), avec au moins un élément d'étanchéité (32, 34) en forme de barrette qui correspond à la largeur de la fente d'introduction/prélèvement (7, 8) et qui est monté mobile, pour l'essentiel transversalement au plan d'introduction/prélèvement du support de données (36), et avec un élément support (33, 35, 49) avec lequel ledit élément d'étanchéité (32, 34) coopère fonctionnellement,
caractérisé par le fait
que l'élément d'étanchéité utilisé est une barrette cylindrique (32, 34) à profil plein à laquelle est associée, comme guidage, une rainure ouvertement formée vers le plan d'introduction/prélèvement dans un composant de boîtier de l'appareil d'acquisition de données, la largeur de ladite rainure correspondant, pour l'essentiel, au diamètre de la barrette cylindrique (32, 34).

2. Dispositif d'étanchéité selon la revendication 1,
caractérisé par le fait
que, symétriquement réfléchie par rapport au plan d'introduction/prélèvement, une deuxième rainure est associé à l'une des rainures et
que, comme élément support pour la barrette cylindrique (32) guidée dans l'une des rainures transversalement au plan d'introduction/prélèvement, une autre barrette cylindrique (33) est insérée dans l'autre rainure.

3. Dispositif d'étanchéité selon la revendication 1,
caractérisé par le fait
qu'à la barrette est associé au moins un ressort (40, 41 ou 44, 45) agissant transversalement au plan d'introduction/prélèvement.

4. Dispositif d'étanchéité selon la revendication 1,
caractérisé par le fait
qu'à la barrette est associé un élément support élastomère.

5. Dispositif d'étanchéité selon la revendication 1,
caractérisé par le fait
que la barrette est dotée d'un enrobage élastomère.

6. Dispositif d'étanchéité selon la revendication 1,
caractérisé par le fait
que la barrette présente un poids spécifique élevé et que la coopération fonctionnelle avec l'élément support qui lui est associé se fait en fonction de la pesanteur.

7. Dispositif d'étanchéité selon la revendication 1,
caractérisé par le fait
que sur un seul et même côté du plan d'introduction/prélèvement sont disposées plus d'une barrette cylindrique.

8. Dispositif d'étanchéité selon la revendication 1,
caractérisé par le fait
que pour la formation de la rainure, une paroi de boîtier frontale (4) de l'appareil d'acquisition de données est reliée, dans la région de la fente d'introduction/prélèvement (7, 8), à un support (22) dans lequel ladite fente d'introduction/prélèvement (7, 8) se prolonge (fentes 24, 25) et sur lequel est formé, du côté frontal, un évidement (30, 31).

9. Dispositif d'étanchéité selon la revendication 1,
caractérisé par le fait
que la coopération fonctionnelle de la barrette avec l'élément support se fait par voie magnétique.

10. Dispositif d'étanchéité selon la revendication 1,
caractérisé par le fait
qu'à la barrette est associé au moins un contact d'un interrupteur d'un circuit de courant de signaux pouvant être actionné par le support de données.
